# EUROPÄISCHE PATENTSCHRIFT

(11) **EP 0 622 384 B1**
(45) Veröffentlichungstag und Bekanntmachung des Hinweises auf die Patenterteilung: **29.07.1998**
(21) Anmeldenummer: 94105445.4
(22) Anmeldetag: 08.04.1994
(51) Int. Cl.: C08F 283/02, C08G 18/63, C08G 18/10

(54) **Verfahren zur Herstellung von Polymerpolyesterolen**
Process for the preparation of polymer-polyesterols
Procédé de préparation de polymères-polyesterols

(30) Priorität: 28.04.1993 DE 4313921
(43) Veröffentlichungstag der Anmeldung: 02.11.1994
(73) Patentinhaber: BASF Aktiengesellschaft, 67063 Ludwigshafen (DE)
(72) Erfinder: Meyer, Baerbel, D-02991 Lauta (DE); Mueller-Hagen, Gerd, Dr., D-67071 Ludwigshafen (DE); Guettes, Bernd, D-03238 Sallgast (DE)

(56) Entgegenhaltungen:
- EP-A- 0 250 351
- EP-A- 0 495 551
- GB-A- 2 053 933
- US-A- 4 357 430
- UTECH 92 J.M. MONSO ; J. SOLER ET AL S. 150-154

## Beschreibung

Die Erfindung betrifft ein Verfahren zur Herstellung von Polymerpolyolen mit Polyesterpolyolen als Grundpolyole sowie nach diesen Verfahren hergestellte Produkte.

Die Herstellung von Polyolen, in denen Vinylpolymere dispergiert sind, ist seit langem bekannt und vielfach in der Literatur beschrieben. Ihre Herstellung erfolgt zumeist durch in situ Polymerisation einzelner Vinylmonomerer oder auch Mischungen derselben unter Verwendung radikalischer Initiatoren in Polyetherolen. Hierbei kommen zumeist Anlagerungsprodukte von Alkylenoxiden, insbesondere Propylenoxid und Ethylenoxid, an OH-funktionelle Startsubstanzen zum Einsatz. Solche Verfahren sind beispielsweise beschrieben in DE-B 1 152 536, DE-A 1 955 891, DE-A 2 448 686, DE-A 2 505 680 US-A 3 418 354, US-A 3 304 273 und US-A 3 383 351. Das Vinylpolymerisat ist im wesentlichen ein Feststoff und stellt im vorliegenden System das Dispergens dar. Die Stabilität der Dispersion wird durch eine offensichtlich eintretende partielle Pfropfung des verwendeten Polyols mit Vinylmonomeren gefördert. Unter der Vielzahl der einsetzbaren Vinylmonomeren werden hauptsächlich Acrylnitril und Styrol, bevorzugt Mischungen von beiden, verwendet.

Für Polymerdispersionen mit geringen Feststoffgehalten und Styrol-Acrylnitril-Verhältnissen etwa 1:1 oder für reine Polyacrylnitrildispersionen ist die Stabilisierung durch die obengenannte partielle Pfropfung ausreichend. Die partielle Pfropfung erfolgt über einen Wasserstoffabstraktionsmechanismus am tertiären Kohlenstoffatom eines Propylenoxidsegments in der Polyetherkette oder durch eine Reaktion an Doppelbindungen, z. B. Allyl- oder cis-Propenylgruppen, die in jedem aus Propylenoxid hergestellten Polyetheralkohol in geringem, aber nicht zu vernachlässigendem Ausmaß enthalten sind. Die von dem Propylenoxidsegment ausgehende Pfropfung ist eine unabdingbare Voraussetzung für die Stabilität der Dispersion. Aus diesem Grunde gelingt es nicht, nach dem obengenannten allgemeinen Verfahren stabile Polymerpolyole aus reinen Polyethylenoxiden herzustellen. Die Forderung nach hochgefüllten Polymerdisperisonen mit erhöhtem Weißheitsgrad führte zur Erhöhung der Konzentration an Styrol. Da das Styrol eine geringe Pfropfneigung aufweist, genügt hier die einfache Stabilisierung durch Pfropfung am Dispersionsmedium nicht mehr, sie muß durch Anwendung spezifischer Dispergierhilfsmittel ergänzt werden. Die Entwicklung von hochkonzentrierten Polymerpolyolen war Ausgang für viele Patente, die Verbesserungen in Synthese und Eigenschaften von Polymeren beanspruchen. Vor allem wird die Erhöhung des Pfropfpolymergehaltes und damit eine ausreichende Stabilisierung der Dispersionen durch das Einbringen von Doppelbindungen erreicht, wie z. B. durch Umsetzen mit ungesättigten Dicarbonsäuren oder deren Anhydriden und Reaktion der zweiten Carboxylgruppe mit Ethylenoxid, durch Urethanisieren mit ungesättigten Isocyanaten, beschrieben in US-A 4 454 255, Verwendung von nicht-wäßrigen Dispergierhilfsmitteln, sogenannten NAD's, beschrieben in EP-A 162 588 und EP-A 162 589. Eine spezielle Variante der Erhöhung der Wirksamkeit der Pfropfung ist der Einsatz von sogenannten Koppelpolyolen, beschrieben in US-A 4 357 430. Koppelpolyole sind Reaktionsprodukte aus Polyisocyanaten und Polyolen, hier Polyetherolen mit Gehalten an Propylenoxid- Strukturen und von diesen sich herleitenden Doppelbindungen, Allyl- bzw. cis-Propenylgruppen. Durch die Molekulargewichtserhöhung des Polyetherols infolge Kopplung wird bei gleicher Pfropfrate die Pfropfausbeute erhöht und so eine verbesserte Dispersionsstabilisierung erreicht.

In den meisten Veröffentlichungen wird bisher nur auf die Möglichkeit hingewiesen, auch Polyesterole als Dispersionsmedium einzusetzen. Die Herstellung von Polymerpolyolen auf der Grundlage von Polyesterolen ist sehr kompliziert, da in den meisten Polyesterolen keine am tertiären Kohlenstoff gebundenen Wasserstoffatome vorkommen, wodurch die eingangs beschriebene wirksame Pfropfung ausbleibt und die Polyesterole erheblich höhere Viskositäten als vergleichbare Polyetherole aufweisen. Wegen der weitaus höheren Viskosität der Polyesterole gegenüber Polyetherolen und einer zu erwartenden erschwerten Verarbeitbarkeit von daraus hergestellten Pfropfpolymerisationsprodukten, haben Polymerpolyesterole bisher nur eine verhältnismäßig geringe Bedeutung in der Polyurethanchemie erlangt.

Polyesterole finden abweichend von Polyetherolen vor allem Verwendung für Schuhsohlen mit verbesserten mechanischen Eigenschaften, für Blockschaum geeignet zur Flammkaschierung, in kompakten Elastomeren für hohe Qualitätsansprüche, in Textil- und Ledercoatings, Klebern u.a.

Analog zu Polyetherolen wird durch Dispergieren von Hochpolymeren in Polyesterolen eine Verbesserung der Gebrauchseigenschaften erwartet.

Stabile Polyesteroldispersionen wurden bisher unter Mitverwendung von ungesättigten Polyesterolen bei der Pfropfpolymerisation von Vinylmonomerengemischen bestehend aus mindestens 10 % Acrylnitril oder Methylmethacrylat und Styrol hergestellt, beschrieben in ES 557 716, ES 555 890 und EP-A 250 351. Der Einsatz ungesättigter Polyesterole ist zwar eine wirksame Methode zur Dispersionsstabilisierung, jedoch kommt es hier neben der gewollten Reaktion der Doppelbindung des Polyesterols mit den Monomeren auch zu unkontrollierten intermolekularen Verknüpfungen der Polyestermoleküle untereinander, wodurch die ohnehin schon hohe Viskosität des Dispersionsmediums weiter erhöht und so der erreichbare Feststoffanteil stark eingeschränkt wird.

Gleichzeitig wird die Herstellung stabiler Polymerpolyesterole in gesättigten Polyesterolen durch Pfropfpolymerisation von Acrylnitril/Styrol oder Methylmethacrylat/Styrol in Gegenwart von 5 - 20 Gew.-% eines Emulgators oder Stabilisators beschrieben (ES 555 780).

Diese Produkte weisen vor allem bei hohem Acrylnitrilanteil sehr hohe Viskositäten auf und haben eine breite Teilchengrößenverteilung.

Deshalb wurde in jüngster Zeit die Herstellung styrolhaltiger Polymerpolyesteroldispersionen in Gegenwart von nichtwäßrigen Dispersionsstabilisatoren empfohlen, (J.M. Monso, J. Soler u.a., UTECH 92, S. 150 - 154). Nachteilig für diese Art der Stabilisierung ist der Herstellungsaufwand für die nichtwäßrigen Dispersionsstabilisatoren.

Der Erfindung lag die Aufgabe zugrunde, Polymerpolyesterole zu entwickeln, die mit ausreichender Stabilität und gut verarbeitbarer Viskosität nach einem einfachen Verfahren hergestellt und zu Polyurethan-Kunststoffen mit verbesserten mechanischen Eigenschaften verarbeitet werden können.

Erfindungsgemäß wurde die Aufgabe dadurch gelöst, daß die Herstellung von Polymerpolyesterolen durch in situ Polymerisation von Vinylmonomeren in Anwesenheit von freie Radikale bildenden Inititatoren in Polyesterolen, sogenannten Basispolyesterolen in Gegenwart von 0,5 bis 30 Gew.-% an Prepolymeren, hergestellt durch Reaktion von Polyesterolen mit Isocyanaten, erfolgt. Gegenstand der Erfindung ist demzufolge ein Verfahren zur Herstellung von Polymerpolyesterolen durch in situ Polymerisation von Vinylmonomeren in Anwesenheit von freie Radikale bildenden Initiatoren in Polyesterolen in Gegenwart von 0,5 bis 30 Gew.-% an Prepolymeren, hergestellt durch Reaktion von Polyesterolen mit Isocyanaten. Als Polyesterole kommen die bekannten Umsetzungsprodukte, die durch Polykondensation von üblichen Di- und Polycarbonsäuren bzw. deren Anhydriden mit mehrwertigen Alkoholen entstehen, zum Einsatz. Als Polycarbonsäuren werden vorzugsweise verwendet Adipinsäure, Phthalsäure, Glutarsäure, Oxalsäure, Malonsäure, Pimelinsäure, Azelainsäure, Sebacinsäure u.a.. Als mehrwertige Alkohole kommen beispielsweise zum Einsatz Ethylenglykol, Diethylenglykol, Propylenglykol, Dipropylenglykol, Butandiol-1,3, Butandiol-1,4, Hexandiol-1,6, Hexandiol-1,4, Cyclohexandimethylalkohol, Propantriol, Trimethylolpropan, Trimethylolbutan, Pentaerythrit und Neopentylglykol. Weiterhin möglich ist der Einsatz von Derivaten des ε-Caprolactons. Die Herstellung der Polyester erfolgt nach den literaturbekannten Verfahren durch Veresterung von Säure- und Alkoholkomponenten, meist bei vermindertem Druck und unter Einsatz der üblichen Katalysatoren.

Zur Herstellung der erfindungsgemäß verwendeten Präpolymeren werden die Polyesterole mit üblichen Isocyanaten umgesetzt. Als Isocyanate werden meist Toluylendiisocyanat, Diisocyanate der Diphenylmethanreihe, Isophorondiisocyanat, Naphtylendiisocyanat-1,5 sowie Hexamethylendiisocyanat-1,6 angewandt. Die Herstellung der erfindungsgemäßen Polymerpolyesterole erfolgt durch in situ Polymerisation von ethylenisch ungesättigten Monomeren, meist Styrol und/oder Acrylnitril, Gemischen von Styrol und Acrylnitril, aber auch Butadien, 2-Methylstyrol und Acrylsäure und deren Derivaten, z.B. Methacrylsäure, Methacrylat, Methylmethacrylat u.a.

Dazu wird dem Basispolyesterol zunächst Präpolymer zugesetzt und intensiv mit dem Polyesterol vermischt. Zu dieser Mischung werden die Monomeren, im allgemeinen gemeinsam mit einem Radikalinitiator, in einer Menge von 0,5 bis 5 Gew.-%, bezogen auf Gesamtmonomergehalt, zugesetzt. Als Radikalinitiator werden meist Azoverbindungen, Peroxide, Perborate, Percarbonate, insbesondere Dibenzoylperoxid, Benzoylhydroperoxid in einer Menge von 0,5 bis 5 Gew.-%, bezogen auf Gesamtmonomergehalt, eingesetzt. Zur besseren Handhabbarkeit ist es üblich, die Monomeren und den Radikalinitiator mit Basispolyesterol zu mischen und diese Mischung zuzusetzen. Die in situ Polymerisation erfolgt vorrangig im diskontinuierlichen Chargenbetrieb, zumeist bei Temperaturen von 110 bis 150°C, vorzugsweise 130°C, sowie bei Normaldruck. An die Umsetzung schließt sich eine Nachreaktion zur Vervollständigung des Monomerenumsatzes und dann eine Vakuumdestillation zum Entfernen der nicht umgesetzten Monomeren an. Die entstehenden Produkte sind stabile, feinteilige Dispersionen mit niedrigen Viskositäten, die mit üblichen Verarbeitungsmethoden zu hochwertigen Polyurethanen umgesetzt werden können.

Daß es mit Hilfe der erfindungsgemäßen Verfahrensweise gelingt, die Aufgabe der Erfindung zu lösen, ist überraschend. Es war insbesondere bei Einsatz von Polyesterolen, die frei von Ungesättigheit und an tertiären Kohlenstoff gebundenen Wasserstoffatomen sind, nicht zu erwarten, daß die erfindungsgemäßen Präpolymeren eine stabilisierende Wirkung ausüben könnten. Der Fachmann mußte vielmehr befürchten, daß aufgrund der unvermeidlichen Viskositätserhöhung infolge der Präpolymerbildung die Polymerpolyolherstellung erschwert werden würde.

Die Erfindung soll durch nachfolgende Beispiele erläutert werden.

### Beispiel 1

2640 g eines Polyesterols auf Basis Adipinsäure-Butandiol-1,4 mit einem durchschnittlichen Molekulargewicht von 2400 wurden mit 1 g Zinn-II-octoat in einem Rührreaktor, der mit Inertgaszuführung Rückflußkühler und Temperaturkontrolle- und Regelung ausgerüstet war, gefüllt und unter kontinuierlichem Rühren auf 80°C erwärmt. Anschließend wurden 250 g 4,4'-Diphenylmethandiisocyanat in 10 Minuten langsam zudosiert. Das Reaktionsprodukt wurde für weitere 15 Minuten auf 120°C erwärmt. 24 g des so hergestellten Präpolymeren wurden 456 g des beschriebenen Polyesterols im bereits beschriebenen Rührreaktor zugesetzt und die Mischung auf 130°C erwärmt. Nach Erreichen der Reaktionstemperatur wurde unter stetigem Rühren gleichmäßig in 45 Minuten ein Gemisch aus 40 g Styrol, 57 g des beschriebenen Polyesterols, 5 g des beschriebenen Präpolymeren und 1,65 g Azobisisobutyronitril dosiert. Die Reaktionstemperatur wurde während der Zugabe im Bereich 125-130°C gehalten. Es schloß sich eine einstündige Nachreaktion bei 130°C zur Vervollständigung des Monomerenumsatzes an. Zur Absenkung des freien Styrols auf ein Mindestmaß wurde anschließend bei 120°C unter Vakuum destilliert. Das erhaltene Polymerpolyesterol hatte eine Hydroxylzahl von 40 mg KOH/g eine Säurezahl von 0,37 mg KOH/g , einen Wassergehalt von 0,01 Gew.-%, bezogen auf das Polymerpolyesterolgemisch, eine Viskosität von 2690 mPa·s bei 75°C und einen Gehalt an freiem Styrol von 0,01 Gew.-%, bezogen auf das Polymerpolyesterolgemisch.

### Beispiel 2

Zu 300 g des in Beispiel 1 verwendeten Basispolyesterols, das 5 Gew.-% des in Beispiel 1 beschriebenen Präpolymeren enthielt, wurde nach der in Beispiel 1 beschriebenen Verfahrensweise eine Mischung aus 50 g Styrol, 50 g Acrylnitril, 95 g des beschriebenen Polyesterols, 5 g des beschriebenen Präpolymeren und 2 g Azobisisobutyronitril dosiert. Nach der Umsetzung und Aufarbeitung wurde ein Polymerpolyesterol mit einer Hydroxylzahl 36 mg KOH/g, einer Säurezahl von 0,35 mg KOH/g, einem Wassergehalt von 0,01 Gew.-%, bezogen auf das Polymerpolyesterolgemisch, einer Viskosität von 3600 mPa·s bei 75°C und einem Gehalt an freien Monomeren von < 0,02 Gew.-%, bezogen auf das Polymerpolyesterolgemisch, erhalten.

### Beispiel 3

Aus 3000 g eines Polyesterols auf Basis Adipinsäure, Monoethylenglykol, Butandiol-1,4 und 250 g 4,4'-Diphenylmethandiisocyanat wurde nach dem in Beispiel 1 beschriebenen Verfahren ein Präpolymer hergestellt. 25 g des so hergestellten Polymeren wurden mit 250 g Basispolyesterol vermischt und wie in Beispiel 1 angegeben zu dieser Mischung ein Gemisch aus 150 g Styrol, 90 g Basispolyesterol, 10 g des beschriebenen Präpolymeren und 4,1 g Azobisisobutyrolnitril dosiert. Es entstand ein Polymerpolyesterol mit einer Hydroxylzahl von 39 mg KOH/g, einer Säurezahl von 0,2 mg KOH/ g, einem Wassergehalt von 0,02 Gew.-%, bezogen auf das Polymerpolyesterolgemisch, einer Viskosität von 3600 mPa·s bei 75°C und einem Gehalt an freiem Styrol von < 0,02 Gew.-%, bezogen auf das Polymerpolyesterolgemisch.

Die Hydroxylzahl wurde jeweils bestimmt nach DIN 53 240, die Säurezahl wurde bestimmt nach DIN 53 402, der Wassergehalt wurde bestimmt nach DIN 51 777 und die Viskosität wurde bestimmt nach DIN 53 214. Die Gehalte an freien Monomeren wurden gaschromatographisch bestimmt.

## Patentansprüche

1. Verfahren zur Herstellung von Polymerpolyesterolen durch in situ Polymerisation von ethylenisch ungesättigten Verbindungen in Gegenwart von Radikalinitiatoren in Polyesterolen, dadurch gekennzeichnet, daß die in situ Polymerisation in Gegenwart von 0,5 bis 30 Gew.-%, bezogen auf das Polyesterol, an Präpolymeren, hergestellt durch Reaktion von Polyesterolen, die frei von Ungesättigtheit und von an tertiärem Kohlenstoff gebundenen Wasserstoffatomen sind, mit Isocyanaten, durchgeführt wird.

2. Verfahren nach Anspruch 1, dadurch gekennzeichnet, daß die Präpolymeren durch Umsetzung des Basispolyesterols mit Isocyanat hergestellt werden.

3. Polymerpolyesterole, herstellbar durch in situ Polymerisation von ethylenisch ungesättigten Verbindungen in Gegenwart von Radikalinitiatoren, dadurch gekennzeichnet, daß die in situ Polymerisation in Gegenwart von 0,5 bis 30 Gew.-%, bezogen auf das Polyesterol, an Präpolymeren, hergestellt durch Reaktion von Polyesterolen die frei von Ungesättigtheit und von an tertiärem Kohlenstoff gebundenen Wasserstoffatomen sind, mit Isocyanaten, durchgeführt wird.

## Claims

1. A process for the preparation of polymeric polyesterols by in-situ polymerization of ethylenically unsaturated compounds in the presence of free-radical initiators in polyesterols, which comprises carrying out the in-situ polymerization in the presence of from 0.5 to 30% by weight, based on the polyesterol, of prepolymers prepared by reacting fully saturated polyesterols containing no hydrogen atoms bonded to tertiary carbon with isocyanates.

2. A process as claimed in claim 1, wherein the prepolymers are prepared by reacting base polyesterol with isocyanate.

3. A polymeric polyesterol which can be prepared by in-situ polymerization of ethylenically unsaturated compounds in the presence of free-radical initiators, wherein the in-situ polymerization is carried out in the presence of from 0.5 to 30% by weight, based on the polyesterol, of prepolymers prepared by reacting fully saturated polyesterols containing no hydrogen atoms bonded to tertiary carbon with isocyanates.

## Revendications

1. Procédé pour la préparation de polymères polyesterols par polymérisation in situ de composés à insaturation éthylénique en présence d'initiateurs radicalaires dans des polyesterols , caractérisé en ce qu'on effectue la polymérisation in situ en présence de prépolymères à concurrence de 0,5 à 30% en poids, rapportés au polyesterol, préparés par mise en réaction de polyesterols qui sont exempts d'insaturation et exempts d'atomes d'hydrogène liés à un atome de carbone tertiaire, avec des isocyanates.

2. Procédé selon la revendication 1, caractérisé en ce qu'on prépare les prépolymères par mise en réaction du polyesterol de base avec un isocyanate.

3. Polymères polyesterols que l'on prépare par polymérisation in situ de composés à insaturation éthylénique en présence d'initiateurs radicalaires, caractérisé en ce qu'on effectue la polymérisation in situ en présence de prépolymères à concurrence de 0,5 à 30% en poids, rapportés au polyesterol, préparés par mise en réaction de polyesterols qui sont exempts d'insaturation et exempts d'atomes d'hydrogène liés à un atome de carbone tertiaire, avec des isocyanates.
